(19) Europäisches Patentamt
European Patent Office
Office européen des brevets

(11) **EP 3 907 188 A1**

(12) **EUROPEAN PATENT APPLICATION**

(43) Date of publication:
**10.11.2021 Bulletin 2021/45**

(51) Int Cl.:
*C02F 1/00* (2006.01)  *B01D 29/92* (2006.01)

(21) Application number: **20173748.3**

(22) Date of filing: **08.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Brita GmbH**
**65232 Taunusstein (DE)**

(72) Inventors:
• **BERNARD, Dominik**
**55118 Mainz (DE)**
• **Lott, Hanno**
**65520 Bad Camberg (DE)**

(54) **DRAINAGE PLATE FOR FLUIDS**

(57) A drainage plate for fluids comprises a flow-enhancing concave surface including an outlet aperture and ridges extending along two, three or more spiral trajectories.

Fig. 1

## Description

### Technology Field

The present invention pertains to fluid treatment, in particular to filtration devices for purification of drinking water.

### Background

Filtration devices are known in the prior art.

US 2006/163148 A1 pertains to a filter housing for a drinking water container comprising an upper and lower housing portion and an in between arranged filter medium. The upper and lower housing portions jointly provide increased water feed-through rate. The filter housing includes a necked down inlet port. Chambers in the upper housing are filled with air. An angle of the lower housing extends to the exit port to provide consistent surface tension across the entire surface of the filter medium. The filter housing is arranged between an upper reservoir and a lower reservoir of the drinking water container, and can be removably attached to, or seated within, the lower reservoir.

US 6,602,410 B1 discloses a filter holder comprising ribs, which act as spacer between a filter and a holder bottom and side wall. The ribs reduce surface tension and thereby promote water flow. The holder bottom is curved downwardly to direct the water flow towards feed-through openings. Thereby a larger surface area of the filter is used and a higher flow rate obtained. When lifting the filter the ribs provide mechanical support and reduce the risk of filter rupture.

EP 0 823 276 B1 describes a fabric insert for a filtration device comprising a screen fabric that protrudes into a filter cup towards a therein contained filter material. Mechanical contact between the screen fabric and the filter material reduces surface tension and promotes liquid flow.

EP 0 900 174 B1 pertains to a gravity-driven water treatment device and filter cartridges comprising an end-of-life mechanism that includes a feed mechanism wherein a float advances in response to the amount of fill water and the amount of treated water. The device comprises an outlet portion with downwardly projecting ribs that reduce surface tension and promote water flow.

EP 0 019 794 B1 relates to a device for water purification with a funnel-shaped part, a sleeve and two sieve-like lids arranged at two opposite ends. The sieve-like lids delimit a retainer space for a granular, water-insoluble filter material and comprise feed-through openings that are smaller than the filter granules. The sleeve and the funnel-shaped part are formed in one piece and house a removable insert terminated with the sieve-like lids.

The efficiency of known filtration devices is still not satisfactory and needs improvement. The present invention, thus, has the object to improve the efficiency of filtration devices, in particular filtration devices for purification of drinking water.

### Summary

The above object is achieved by a drainage plate comprising a flow-enhancing concave surface that includes an outlet aperture and ridges extending along two, three or more spiral trajectories.

In a first embodiment a drainage plate for fluids comprises a flow-enhancing surface with an outlet aperture.

In a second embodiment a filtration device includes an inlet portion for introduction of a feed fluid, a filtration portion for holding a filter cartridge and an outlet portion, wherein the inlet portion, the filtration portion and the outlet portion are fluidly connected, the filtration portion is arranged between the inlet portion and the outlet portion and the outlet portion comprises a drainage plate.

### Brief Description of the Drawings

Fig. 1 depicts a schematic cross-section of a filtration device comprising a drainage plate.

Figures 2A-2C show schematic cross-sections of drainage plates having a conical or parabolic base shape.

Fig. 3 shows a perspective view of a flow-enhancing surface with conical base shape and three spiral ridges.

Fig. 4 illustrates a flow-enhancing surface with conical base shape and two spiral ridges that protrude upwards to a horizontal plane.

Fig. 5 illustrates a flow-enhancing surface with conical base shape and three spiral ridges having a triangular cross-section.

Fig. 6 depicts a flow-enhancing surface with parabolic base shape and two spiral trajectories for ridge layout.

Figures 7A-7D show plan views of flow-enhancing surfaces with various spiral ridge layouts.

Fig. 8 illustrates a method for computer-aided design of a spiral ridge with bell-shaped cross-section.

**Detailed Description**

The present invention relates to a drainage plate comprising a flow-enhancing concave surface that includes an outlet aperture and ridges extending along two, three or more spiral trajectories.

Expedient embodiments of the inventive drainage plate comprise one or more of the following additional features which may be added individually or in any deliberate combination, provided the combined features do not contradict each other and are characterized in that:

- the area of the flow-enhancing surface constitutes $\geq$ 60%, $\geq$ 70%, $\geq$ 80% or $\geq$ 90% of the total area of a drainage plate front face;

- the ridges form an integral part of the flow-enhancing surface;

- each ridge extends from an outer perimeter to an inner perimeter of the flow-enhancing surface;

- two or more ridges are arranged along each spiral trajectory connecting an outer and an inner perimeter of the flow-enhancing surface;

- one, two or more ridges are arranged along each spiral trajectory connecting an outer and an inner perimeter of the flow-enhancing surface and the sum of the lengths of the one, two or more ridges amounts to $\geq$ 70%, $\geq$ 80% or $\geq$ 90% of the length of the spiral trajectory;

- the ridges have a length to width ratio between 10:1 and 1000:1;

- the ridges have a length to width ratio in a range selected from 10:1 to 30:1, 20:1 to 40:1, 30:1 to 50:1, 40:1 to 60:1, 50:1 to 70:1, 60:1 to 80:1, 70:1 to 90:1, 80:1 to 100:1, 50:1 to 150:1, 100:1 to 200:1, 150:1 to 250:1, 200:1 to 400:1, 300:1 to 500:1, 400:1 to 600:1, 500:1 to 700:1, 600:1 to 800:1, 700:1 to 900:1 and 800:1 to 1000:1;

- the ridges have a width w with 2 mm $\leq$ w $\leq$ 10 mm;

- the ridges have a width w in a range selected from 2 mm $\leq$ w $\leq$ 4 mm, 3 mm $\leq$ w $\leq$ 5 mm, 4 mm $\leq$ w $\leq$ 6 mm, 5 mm $\leq$ w $\leq$ 7 mm, 6 mm $\leq$ w $\leq$ 8 mm, 7 mm $\leq$ w $\leq$ 9 mm and 8 mm $\leq$ w $\leq$ 10 mm;

- the ridges have a length to height ratio between 10:1 and 1000:1;

- the ridges have a length to height ratio in a range selected from 10:1 to 30:1, 20:1 to 40:1, 30:1 to 50:1, 40:1 to 60:1, 50:1 to 70:1, 60:1 to 80:1, 70:1 to 90:1, 80:1 to 100:1, 50:1 to 150:1, 100:1 to 200:1, 150:1 to 250:1, 200:1 to 400:1, 300:1 to 500:1, 400:1 to 600:1, 500:1 to 700:1, 600:1 to 800:1, 700:1 to 900:1 and 800:1 to 1000:1;

- the ridges have a height hr with 2 mm $\leq$ hr $\leq$ 40 mm;

- the ridges have a height hr in a range selected from 2 mm $\leq$ hr $\leq$ 4 mm, 3 mm $\leq$ hr $\leq$ 5 mm, 4 mm $\leq$ hr $\leq$ 6 mm, 5 mm $\leq$ hr $\leq$ 7 mm, 6 mm $\leq$ hr $\leq$ 8 mm, 7 mm $\leq$ hr $\leq$ 9 mm, 8 mm $\leq$ hr $\leq$ 10 mm, 5 mm $\leq$ hr $\leq$ 15 mm, 10 mm $\leq$ hr $\leq$ 20 mm, 15 mm $\leq$ hr $\leq$ 25 mm, 20 mm $\leq$ hr $\leq$ 30 mm, 25 mm $\leq$ hr $\leq$ 35 mm and 30 mm $\leq$ hr $\leq$ 40 mm;

- the ridges have an approximately rectangular cross-section;

- the ridges have a polygonal cross-section;

- the ridges have a cross-section shaped as a trapezoid with two rectangular angles;

- the ridges have an approximately triangular cross-section;

- the ridges have a triangular cross-section;

- the ridges have an approximately triangular cross-section and comprise a spiral surface having a normal vector aligned to a center axis of a conical, parabolic or spherical base shape of the flow-enhancing surface within 10 degrees;

- the ridges have a triangular cross-section and comprise a spiral surface having a normal vector aligned to a center axis of a conical, parabolic or spherical base shape of the flow-enhancing surface within 10 degrees;

- the ridges have an approximately bell-shaped cross-section;

- the ridges have a bell-shaped cross-section;

- the ridges have a cross-section with a shape corresponding to a Gauss, Lorentz or Voigt function;

- the outlet aperture is arranged at a center axis of the flow-enhancing surface;

- the outlet aperture has a circular cross-section;

- the flow-enhancing surface is configured as a conical, parabolic or spherical surface that includes an outlet aperture and ridges extending along two, three or more spiral trajectories;

- the flow-enhancing surface is configured as a conical, parabolic or spherical surface that includes an outlet aperture and ridges extending along two, three or more spiral trajectories and protruding to a plane defined by an outer perimeter of the conical, parabolic or spherical surface;

- the flow-enhancing surface is configured as a conical, parabolic or spherical surface that includes an outlet aperture and ridges extending along two, three or more spiral trajectories and protruding parallel to a center axis of the conical, parabolic or spherical surface;

- the flow-enhancing surface is configured as a conical, parabolic or spherical surface that includes an outlet aperture and ridges extending along two, three or more spiral trajectories and protruding parallel to a surface normal of the conical, parabolic or spherical surface;

- the flow-enhancing surface is configured as a conical surface which, in a reference coordinate system with origin $(0,0,0)$ and orthonormal unit vectors $(1,0,0)$, $(0,1,0)$, $(0,0,1)$, is described by a vector function

$$\vec{c} = \begin{bmatrix} \rho \cos \varphi \\ \rho \sin \varphi \\ \dfrac{h}{R-r}(\rho - R) \end{bmatrix} \quad \text{with} \quad r \leq \rho \leq R \quad \text{and} \quad 0 \leq \varphi \leq 2\pi$$

and includes ridges extending along two, three or more spiral trajectories;

- the flow-enhancing surface is configured as a conical surface which, in a reference coordinate system with origin $(0,0,0)$ and orthonormal unit vectors $(1,0,0)$, $(0,1,0)$, $(0,0,1)$, is described by a vector function

$$\vec{c} = \begin{bmatrix} \rho \cos \varphi \\ \rho \sin \varphi \\ \dfrac{h}{R-r}(\rho - R) \end{bmatrix} \quad \text{with} \quad r \leq \rho \leq R \quad \text{and} \quad 0 \leq \varphi \leq 2\pi$$

and includes ridges extending along two, three or more spiral trajectories and protruding to a horizontal plane with normal vector (0,0,1) at distance zero from origin (0,0,0);

- the flow-enhancing surface is configured as a conical surface which, in a reference coordinate system with origin (0,0,0) and orthonormal unit vectors (1,0,0), (0,1,0), (0,0,1), is described by a vector function

$$\vec{c} = \begin{bmatrix} \rho \cos\varphi \\ \rho \sin\varphi \\ \dfrac{h}{R-r}(\rho - R) \end{bmatrix} \quad \text{with} \quad r \le \rho \le R \quad \text{and} \quad 0 \le \varphi \le 2\pi$$

and includes ridges extending along two, three or more spiral trajectories and protruding in direction (0,0,1) ;

- the flow-enhancing surface is configured as a conical surface which, in a reference coordinate system with origin (0,0,0) and orthonormal unit vectors (1,0,0), (0,1,0), (0,0,1), is described by a vector function

$$\vec{c} = \begin{bmatrix} \rho \cos\varphi \\ \rho \sin\varphi \\ \dfrac{h}{R-r}(\rho - R) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{t}_i = \begin{bmatrix} R\dfrac{\gamma}{\pi} \cos\left(\dfrac{2\pi}{n}i + m\gamma\right) \\ R\dfrac{\gamma}{\pi} \sin\left(\dfrac{2\pi}{n}i + m\gamma\right) \\ h\dfrac{R}{R-r}\left(\dfrac{\gamma}{\pi} - 1\right) \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \dots, n \quad \text{and} \quad n \in \{2, 3, 4, 5, 6, 7, 8, 9, 10\} \end{cases}$$

- the flow-enhancing surface is configured as a conical surface which, in a reference coordinate system with origin (0,0,0) and orthonormal unit vectors (1,0,0), (0,1,0), (0,0,1), is described by a vector function

$$\vec{c} = \begin{bmatrix} \rho \cos\varphi \\ \rho \sin\varphi \\ \dfrac{h}{R-r}(\rho - R) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{t}_i = \begin{bmatrix} R\dfrac{\gamma}{\pi} \cos\left(\dfrac{2\pi}{n}i + m\gamma\right) \\ R\dfrac{\gamma}{\pi} \sin\left(\dfrac{2\pi}{n}i + m\gamma\right) \\ h\dfrac{R}{R-r}\left(\dfrac{\gamma}{\pi} - 1\right) \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \dots, n \quad \text{and} \quad n \in \{2, 3, 4, 5, 6, 7, 8, 9, 10\} \end{cases}$$

and protruding in a surface normal direction described by vectors

$$\left[ h\dfrac{R}{R-r}\left(1 - \dfrac{\gamma}{\pi}\right)\cos\left(\dfrac{2\pi}{n}i + m\gamma\right), \ h\dfrac{R}{R-r}\left(1 - \dfrac{\gamma}{\pi}\right)\sin\left(\dfrac{2\pi}{n}i + m\gamma\right), \ R\dfrac{\gamma}{\pi} \right];$$

- the flow-enhancing surface is configured as a conical surface which, in a reference coordinate system with origin (0,0,0) and orthonormal unit vectors (1,0,0), (0,1,0), (0,0,1), is described by a vector function

$$\vec{c} = \begin{bmatrix} \rho \cos \varphi \\ \rho \sin \varphi \\ \dfrac{h}{R-r}(\rho - R) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{t}_i = \begin{bmatrix} R\dfrac{\gamma}{\pi} \cos\left(\dfrac{2\pi}{n}i + m\,\gamma\right) \\ -R\dfrac{\gamma}{\pi} \sin\left(\dfrac{2\pi}{n}i + m\,\gamma\right) \\ h\dfrac{R}{R-r}\left(\dfrac{\gamma}{\pi} - 1\right) \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \dots, n \quad \text{and} \quad n \in \{2, 3, 4, 5, 6, 7, 8, 9, 10\} \end{cases}$$

- the flow-enhancing surface is configured as a conical surface which, in a reference coordinate system with origin (0,0,0) and orthonormal unit vectors (1,0,0), (0,1,0), (0,0,1), is described by a vector function

$$\vec{c} = \begin{bmatrix} \rho \cos \varphi \\ \rho \sin \varphi \\ \dfrac{h}{R-r}(\rho - R) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{t}_i = \begin{bmatrix} R\dfrac{\gamma}{\pi} \cos\left(\dfrac{2\pi}{n}i + m\,\gamma\right) \\ -R\dfrac{\gamma}{\pi} \sin\left(\dfrac{2\pi}{n}i + m\,\gamma\right) \\ h\dfrac{R}{R-r}\left(\dfrac{\gamma}{\pi} - 1\right) \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \dots, n \quad \text{and} \quad n \in \{2, 3, 4, 5, 6, 7, 8, 9, 10\} \end{cases}$$

and protruding in a surface normal direction described by vectors

$$\left[ h\dfrac{R}{R-r}\left(1 - \dfrac{\gamma}{\pi}\right) \cos\left(\dfrac{2\pi}{n}i + m\,\gamma\right), \; -h\dfrac{R}{R-r}\left(1 - \dfrac{\gamma}{\pi}\right) \sin\left(\dfrac{2\pi}{n}i + m\,\gamma\right), \; R\dfrac{\gamma}{\pi} \right];$$

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho \cos \varphi \\ \rho \sin \varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along two, three or more spiral trajectories;

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho\cos\varphi \\ \rho\sin\varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along two, three or more spiral trajectories and protruding to a horizontal plane with normal vector (0,0,1) at distance zero from origin (0,0,0);

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho\cos\varphi \\ \rho\sin\varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along two, three or more spiral trajectories and protruding in direction (0,0,1) ;

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho\cos\varphi \\ \rho\sin\varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{\tau}_i = \begin{bmatrix} R\dfrac{\gamma}{\pi}\cos\left(\dfrac{2\pi}{n}i + m\,\gamma\right) \\ R\dfrac{\gamma}{\pi}\sin\left(\dfrac{2\pi}{n}i + m\,\gamma\right) \\ h\dfrac{R^2}{R^2 - r^2}\left[\left(\dfrac{\gamma}{\pi}\right)^2 - 1\right] \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \ldots, n \ \text{ and } \ n \in \{2, 3, 4, 5, 6, 7, 8, 9, 10\} \end{cases}$$

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho\cos\varphi \\ \rho\sin\varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{\tau}_i = \begin{bmatrix} R\dfrac{\gamma}{\pi}\cos\left(\dfrac{2\pi}{n}i + m\,\gamma\right) \\ R\dfrac{\gamma}{\pi}\sin\left(\dfrac{2\pi}{n}i + m\,\gamma\right) \\ h\dfrac{R^2}{R^2 - r^2}\left[\left(\dfrac{\gamma}{\pi}\right)^2 - 1\right] \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \ldots, n \ \text{ and } \ n \in \{2, 3, 4, 5, 6, 7, 8, 9, 10\} \end{cases}$$

and protruding in a surface normal direction described by vectors

$$\left[ h\frac{R^2}{R^2-r^2}\left[1-\left(\frac{\gamma}{\pi}\right)^2\right]\cos\left(\frac{2\pi}{n}i + m\,\gamma\right),\ h\frac{R^2}{R^2-r^2}\left[1-\left(\frac{\gamma}{\pi}\right)^2\right]\sin\left(\frac{2\pi}{n}i + m\,\gamma\right),\ R\frac{\gamma}{\pi}\right];$$

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho\cos\varphi \\ \rho\sin\varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{\tau}_i = \begin{bmatrix} R\dfrac{\gamma}{\pi}\cos\left(\dfrac{2\pi}{n}i + m\,\gamma\right) \\ -R\dfrac{\gamma}{\pi}\sin\left(\dfrac{2\pi}{n}i + m\,\gamma\right) \\ h\dfrac{R^2}{R^2-r^2}\left[\left(\dfrac{\gamma}{\pi}\right)^2 - 1\right] \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \ldots, n \quad \text{and} \quad n \in \{2,3,4,5,6,7,8,9,10\} \end{cases}$$

- the flow-enhancing surface is configured as a parabolic surface which, in a reference coordinate system with origin (0,0,0) and orthonormal unit vectors (1,0,0), (0,1,0), (0,0,1), is described by a vector function

$$\vec{p} = \begin{bmatrix} \rho\cos\varphi \\ \rho\sin\varphi \\ \dfrac{h}{R^2 - r^2}(\rho^2 - R^2) \end{bmatrix} \quad \text{with} \quad r \le \rho \le R \quad \text{and} \quad 0 \le \varphi \le 2\pi$$

and includes ridges extending along n spiral trajectories described by vector functions

$$\vec{\tau}_i = \begin{bmatrix} R\dfrac{\gamma}{\pi}\cos\left(\dfrac{2\pi}{n}i + m\,\gamma\right) \\ -R\dfrac{\gamma}{\pi}\sin\left(\dfrac{2\pi}{n}i + m\,\gamma\right) \\ h\dfrac{R^2}{R^2-r^2}\left[\left(\dfrac{\gamma}{\pi}\right)^2 - 1\right] \end{bmatrix} \quad \text{with} \quad \begin{cases} \dfrac{r}{R}\pi \le \gamma \le \pi \\ m \in \mathbb{R} \quad \text{and} \quad 2 \le m \le 10 \\ i = 1, 2, \ldots, n \quad \text{and} \quad n \in \{2,3,4,5,6,7,8,9,10\} \end{cases}$$

and protruding in a surface normal direction described by vectors

$$\left[ h\frac{R^2}{R^2-r^2}\left[1-\left(\frac{\gamma}{\pi}\right)^2\right]\cos\left(\frac{2\pi}{n}i + m\,\gamma\right),\ -h\frac{R^2}{R^2-r^2}\left[1-\left(\frac{\gamma}{\pi}\right)^2\right]\sin\left(\frac{2\pi}{n}i + m\,\gamma\right),\ R\frac{\gamma}{\pi}\right];$$

- the flow-enhancing surface has a bounding outer radius R with 20 mm ≤ R ≤ 500 mm;

- the flow-enhancing surface has a bounding outer radius R in a range selected from 20 mm ≤ R ≤ 60 mm, 40 mm ≤ R ≤ 80 mm, 60 mm ≤ R ≤ 100 mm, 80 mm ≤ R ≤ 120 mm, 100 mm ≤ R ≤ 200 mm, 150 mm ≤ R ≤ 250 mm, 200 mm ≤ R ≤ 300 mm, 250 mm ≤ R ≤ 350 mm, 300 mm ≤ R ≤ 400 mm, 350 mm ≤ R ≤ 450 mm and 400 mm ≤ R ≤ 500 mm;

- the flow-enhancing surface has a bounding inner radius r with 2 mm ≤ r ≤ 100 mm;

- the flow-enhancing surface has a bounding inner radius r in a range selected from 2 mm ≤ r ≤ 4 mm, 3 mm ≤ r ≤ 5 mm, 4 mm ≤ r ≤ 6 mm, 5 mm ≤ r ≤ 7 mm, 6 mm ≤ r ≤ 8 mm, 8 mm ≤ r ≤ 10 mm, 9 mm ≤ r ≤ 11 mm, 10 mm ≤ r ≤ 12 mm, 2 mm ≤ r ≤ 10 mm, 5 mm ≤ r < 15 mm, 10 mm ≤ r ≤ 20 mm, 15 mm ≤ r ≤ 25 mm, 20 mm ≤ r ≤ 40 mm, 30 mm ≤ r ≤ 50 mm, 40 mm ≤ r ≤ 60 mm, 70 mm ≤ r ≤ 90 mm and 80 mm ≤ r ≤ 100 mm;

- the flow-enhancing surface has a bounding outer radius R and a bounding inner radius r wherein a ratio R/r satisfies the relation 2 ≤ R/r ≤ 200;

- the flow-enhancing surface has a bounding outer radius R and a bounding inner radius r wherein a ratio R/r satisfies a relation selected from 2 ≤ R/r ≤ 4, 3 ≤ R/r ≤ 5, 4 ≤ R/r ≤ 6, 5 ≤ R/r ≤ 7, 6 ≤ R/r ≤ 8, 7 ≤ R/r ≤ 9, 8 ≤ R/r ≤ 10, 9 ≤ R/r ≤ 11, 10 ≤ R/r ≤ 12, 11 ≤ R/r ≤ 13, 12 ≤ R/r ≤ 14, 13 ≤ R/r ≤ 15, 5 ≤ R/r ≤ 15, 10 ≤ R/r ≤ 20, 15 ≤ R/r ≤ 25, 20 ≤ R/r ≤ 40, 30 ≤ R/r ≤ 50, 40 ≤ R/r ≤ 60, 50 ≤ R/r ≤ 150 and 100 ≤ R/r ≤ 200;

- the flow-enhancing surface has a height h with 2 mm ≤ h ≤ 100 mm;

- the flow-enhancing surface has a height h in a range selected from 2 mm ≤ h ≤ 4 mm, 3 mm ≤ h ≤ 5 mm, 4 mm ≤ h ≤ 6 mm, 5 mm ≤ h ≤ 7 mm, 6 mm ≤ h ≤ 8 mm, 7 mm ≤ h ≤ 9 mm, 8 mm ≤ h ≤ 10 mm, 5 mm ≤ h ≤ 15 mm, 10 mm ≤ h ≤ 20 mm, 15 mm ≤ h ≤ 25 mm, 20 mm ≤ h ≤ 30 mm, 25 mm ≤ h ≤ 35 mm, 30 mm ≤ h ≤ 50 mm, 40 mm ≤ h ≤ 60 mm, 50 mm ≤ h ≤ 70 mm, 60 mm ≤ h ≤ 80 mm, 70 mm ≤ h ≤ 90 mm and 80 mm ≤ h ≤ 100 mm;

- the flow-enhancing surface has a bounding outer radius R, a bounding inner radius r and a height h which satisfy the relation 1 ≤ (R-r)/h ≤ 57;

- the flow-enhancing surface has a bounding outer radius R, a bounding inner radius r and height h which satisfy a relation selected from 1 ≤ (R-r)/h ≤ 3, 2 ≤ (R-r)/h ≤ 4, 3 ≤ (R-r)/h ≤ 5, 4 ≤ (R-r)/h ≤ 6, 5 ≤ (R-r)/h ≤ 7, 6 ≤ (R-r)/h ≤ 8, 7 ≤ (R-r)/h ≤ 9, 8 ≤ (R-r)/h ≤ 10, 9 ≤ (R-r)/h ≤ 11, 10 ≤ (R-r)/h ≤ 12, 11 ≤ (R-r)/h ≤ 13, 12 ≤ (R-r)/h ≤ 14, 10 ≤ (R-r)/h ≤ 30 and 20 ≤ (R-r)/h ≤ 57;

- the drainage plate comprises an outlet duct;

- the drainage plate comprises an outlet duct having an inner surface abutting on an inner perimeter of the flow-enhancing surface;

- the flow-enhancing surface and an inner surface of the outlet duct form a continuous one piece surface;

- the flow-enhancing surface and an inner surface of the outlet duct form a smooth one piece surface;

- the outlet duct has a cylindrical wall;

- the drainage plate comprises a flange surrounding the flow-enhancing surface;

- the drainage plate comprises a flange abutting on and surrounding the flow-enhancing surface;

- the flow-enhancing surface and a surface of the flange form a continuous one piece surface;

- the flow-enhancing surface and a surface of the flange form a smooth one piece surface;

- a surface of the flange has an annular shape;

- a surface of the flange has a flat annular shape with a bounding inner radius $r_a$ that satisfies the relation R ≤ $r_a$ ≤ 1.3 R;

- the flange comprises a cylindrical wall;

- the flange comprises a conical wall;

- the flow-enhancing surface has an average surface roughness Rz with 20 nm ≤ Rz ≤ 2 μm;

- the flow-enhancing surface has an average surface roughness Rz in a range selected from 20 nm ≤ Rz ≤ 40 nm, 30 nm ≤ Rz ≤ 50 nm, 40 nm ≤ Rz ≤ 60 nm, 50 nm ≤ Rz ≤ 70 nm, 60 nm ≤ Rz ≤ 80 nm, 70 nm ≤ Rz ≤ 90 nm, 80 nm ≤ Rz ≤ 100 nm, 50 nm ≤ Rz ≤ 300 nm, 200 nm ≤ Rz ≤ 400 nm, 300 nm ≤ Rz ≤ 500 nm, 400 nm ≤ Rz ≤ 600 nm, 500 nm ≤ Rz ≤ 700 nm, 600 nm ≤ Rz ≤ 800 nm, 700 nm ≤ Rz ≤ 900 nm, 800 nm ≤ Rz ≤ 1000 nm, 500 nm ≤ Rz ≤ 1500 nm and 1000 nm ≤ Rz ≤ 2000 nm;

- the drainage plate is made from a one piece material;

- the drainage plate is made from a polymeric material;

- the drainage plate is made from a hydrophilic polymeric material;

- the drainage plate is made from a polar polymeric material;

- the drainage plate is made from a polymeric material selected from poly(methacrylic acid)s and polymethacrylates;

- the drainage plate is made from a hydrophobic polymeric material;

- the drainage plate is made from an apolar polymeric material;

- the drainage plate is made from a polymeric material selected from the group comprising polyolefins, polyethylenes, polypropylenes, acrylate polymers, acrylonitrile homo- and copolymers, polycarbonates, poly(chlorotrifluoroethylene), poly(tetrafluorethylene), polystyrene and styrene copolymers;

- the drainage plate is made from a polymeric material by injection molding;

- the drainage plate is made from a polymeric sheet material by thermoforming;

- the drainage plate is made from a polymeric sheet material by vacuum thermoforming;

- the drainage plate is made from a polymeric sheet material by press thermoforming; and/or

- the drainage plate is made from a polymeric sheet material by vacuum membrane press thermoforming.

The present invention has the further object to provide a filtration device, in particular a filtration device for purification of drinking water, having improved efficiency.

This object is achieved by a filtration device including an inlet portion for introduction of a feed fluid, a filtration portion for holding a filter cartridge and an outlet portion, wherein

- the inlet portion, the filtration portion and the outlet portion are fluidly connected;

- the filtration portion is arranged between the inlet portion and the outlet portion; and

- the outlet portion is equipped with a drainage plate comprising a flow-enhancing concave surface that includes an outlet aperture and ridges extending along two, three or more spiral trajectories.

Expedient embodiments of the inventive filtration device are characterized in that:

- the filtration device comprises a drainage plate having one or more features selected from the above described features;

- the filtration device comprises a feed water reservoir arranged in the inlet portion or between the inlet and the filtration portion;

- the filtration device comprises a filtered water reservoir arranged beneath the filtration portion and the drainage plate;

- the filtration device comprises a replaceable filter cartridge;

- the filtration device comprises a housing;

- the filtration device comprises a housing equipped with an outer thread;

- the filtration device comprises a fastener adapted to mechanically fixate the drainage plate; and/or

- the fastener is equipped with an inner thread configured for engagement with an outer thread of the housing.

Aside from water filtration the drainage plate of the present invention may be employed for fluid conveyance, collection and recycling in agriculture, geo-hydraulics, water management, sewage treatment facilities, oil production and hydraulic machinery.

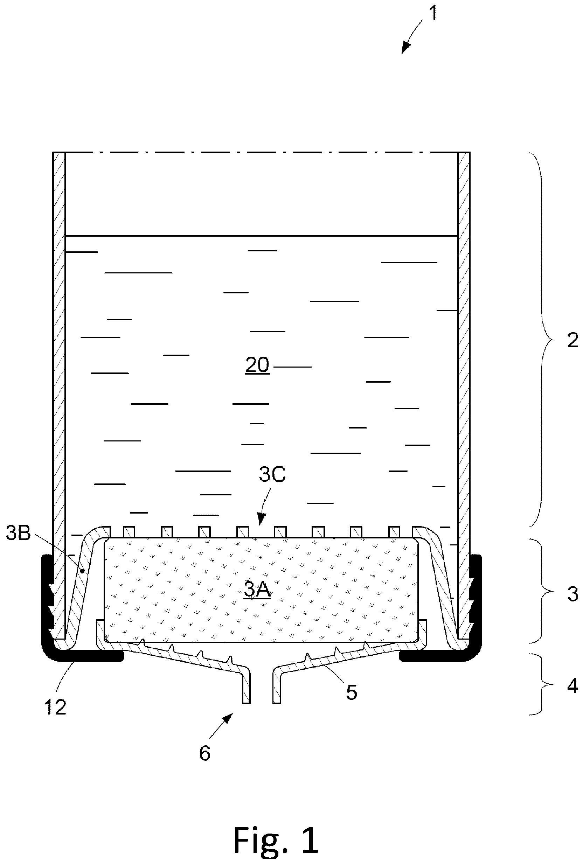

The invention is hereafter further exemplified with reference to Figures 1-8. It is emphasized that Figures 1-8 and thereto pertaining explanations merely illustrate the invention and shall not be construed as limitation.

A drainage plate comprising a concave flow-enhancing surface with thereto integral spiral ridges constitutes the main inventive concept. The ridges function as hydraulic baffles that guide filtered fluid along a spiral vortex-like path. The inventors have found that the vortex-like flow pattern affords higher filtration throughput. This finding is quite surprising and defies analysis within the framework of conventional fluid dynamics, let alone computational fluid dynamics.

For the sake of intelligibility the explanations pertaining to Figures 1-8 may refer to the spiral ridges as entities apparently distinct from the flow-enhancing surface. Notwithstanding such figurative wording, it is pointed out that the flow-enhancing surface is integrally comprised of a base part having a conical, parabolic or spherical shape and two or more spiral ridges.

In the present invention either of terms "conical", "parabolic" and "spherical" pertains to a base shape comprising an outlet aperture and thus encompasses a frusto-conical, frusto-parabolic and frusto-spherical shape, respectively.

In practical embodiments of the present invention the distinction between a flow-enhancing surface having a spherical versus a parabolic base shape is insignificant as the aspect ratio $(R-r)/h$ between radial dimension $(R-r)$ and height $h$ is preferably greater than 3, such that the flow-enhancing surface is substantially shallow and the difference between a spherical and a parabolic shape is negligible. Thus, a parabolic shape is technically equivalent to a spherical shape.

In the present invention the term "spiral trajectory" refers to a three-dimensional geometric curve (or a set of three-dimensional vectors) and not to a physical entity. In the context of computer-aided design (CAD) the term "spiral trajectory" may be understood as profile extrusion path (or guide curve) for generating a spiral ridge as integral component of the flow-enhancing surface.

In the present invention the term "height of a spiral ridge" pertains to a maximal distance of a point on the spiral ridge from a conical, parabolic or spherical base part of the flow-enhancing surface. Depending on whether the spiral ridge protrudes from the conical, parabolic or spherical base part of the flow-enhancing surface in a normal i.e. perpendicular direction or parallel to a center axis thereof the maximal distance between a point on the ridge and the base part is determined along said direction.

In the present invention the term "width of a spiral ridge" pertains to a ratio determined by dividing the area of a cross-section of a spiral ridge by its height as defined in the preceding paragraph.

It is noted that the cross-section and height of a spiral ridge may vary along its spiral layout trajectory, as described above.

Generally, the shape of the inventive drainage plate including the flow-enhancing surface and thereto integral ridges is determined by design, in particular by computer-aided design (CAD) and mass-manufactured to dimension. In practice any deviation in shape between a concrete embodiment of the inventive drainage plate and its design is negligible. Hence, there is no need to measure the shape and dimensions of concrete embodiments of the inventive drainage plate. Notwithstanding, for verification or comparison the shape of concrete drainage plates may be measured pursuant to VDI/VDE Standard 2634, Part 3, 2012-08 using a 3D laser scanner calibrated according to ISO 17025.

Fig. 1 shows a schematic cross-section of a filtration device 1 comprised of an inlet portion 2, a filtration portion 3 and an outlet portion 4 that are fluidly connected. A feed fluid 20 to be filtered is stored in a reservoir integrated within inlet portion 2. Filtration portion 3 houses filter 3A held in place by bracket 3B having feed-through apertures 3C. Expediently, filter 3A may be shaped as cylindrical disc. Outlet portion 4 comprises a drainage plate 5 arranged beneath filter 3A and fixated via a ring-shaped fastener 12. Fastener 12 may be provided with an inner thread configured for engagement with a thread arranged on an outer side of a housing of filtration device 1. Preferably, drainage plate 5 is equipped with an outlet duct 6.

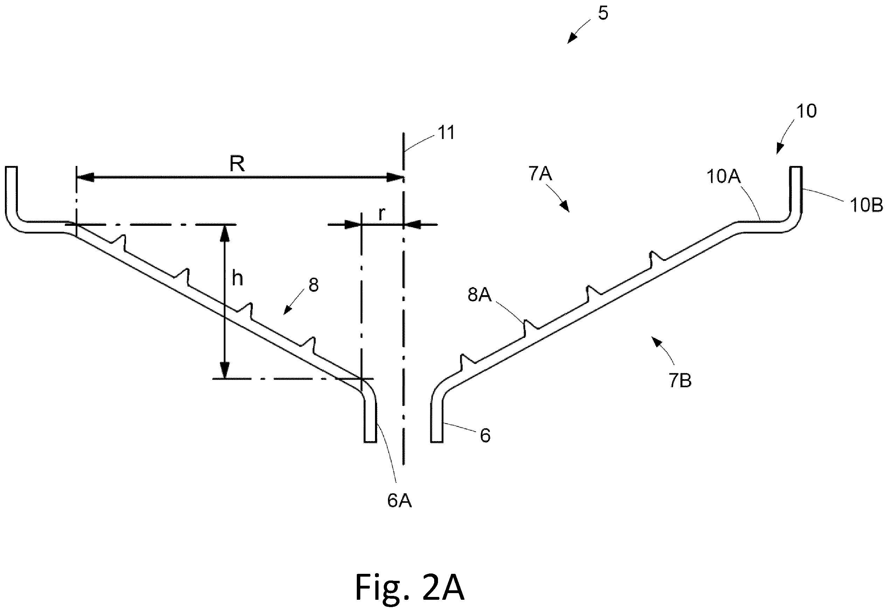

Fig. 2A depicts a schematic cross-section of a drainage plate 5 having a conical base shape with front face 7A and back face 7B. Drainage plate 5 may be made from a polymeric one piece material by mold injection or thermo forming.

Drainage plate 5 may be mounted in filtration device 1 (cf. Fig. 1) in such manner that front face 7A is oriented towards filter 3A. Front face 7A comprises a flow-enhancing surface 8 including two or more spiral ridges 8A. A conical base part of flow-enhancing surface 8A has a center axis 11 and is bound by an inner and outer circular perimeter having radius r and R, respectively. A height of flow-enhancing surface 8 in the direction of center axis 11 is designated by letter h.

Ridges 8A protrude perpendicular i.e. normal to the conical base of flow-enhancing surface 8.

Drainage plate 5 may comprise an outlet duct 6 with inner surface 6A. Drainage plate 5 may also include a flange 10. Flange 10 may be ring-shaped and comprise an annular surface 10A configured as support for filter 3A (see Fig. 1). Flange 10 may be further equipped with a cylindrical or conical wall 10B for lateral alignment and retention of filter 3A (see Fig. 1).

Preferably, either annular flange surface 10A and inner duct surface 6A abut to flow-enhancing surface 8 in a continuous manner and form a smooth one piece surface with flow-enhancing surface 8.

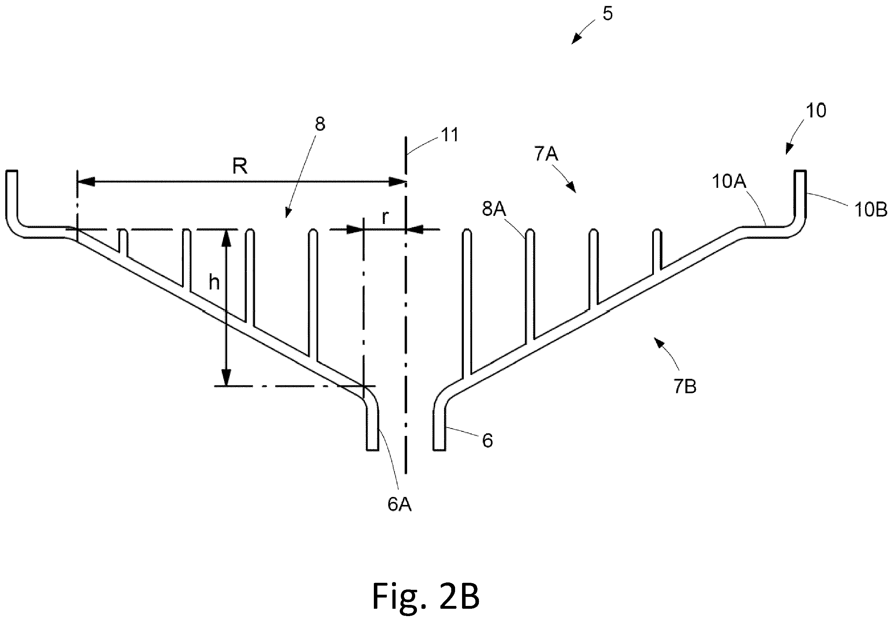

Fig. 2B depicts a cross-section of another drainage plate 5 with conical base shape. Reference signs in Fig. 2B have the same meaning as described above in conjunction with Fig. 2A. Distinct from Fig. 2A, ridges 8A in Fig. 2B protrude parallel to center axis 11 up to a plane spanned by an outer perimeter of flow-enhancing surface 8. This configuration ensures that an edge of each ridge 8A distal from the base of flow-enhancing surface 8 contacts a lower face of filter 3A depicted in Fig. 1.

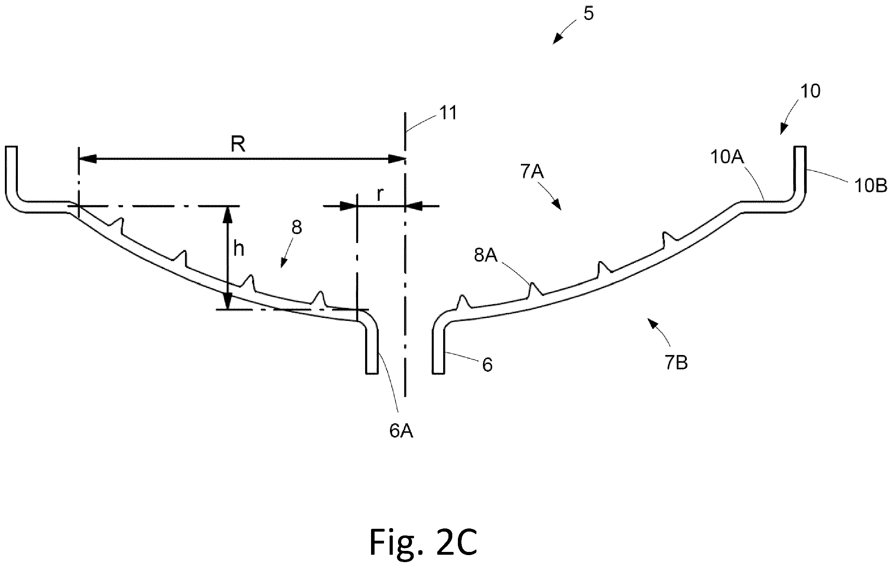

Fig. 2C shows a cross-section of another drainage plate 5 with parabolic base shape. Reference signs of Fig. 2C have the same meaning as described above in conjunction with Fig. 2A.

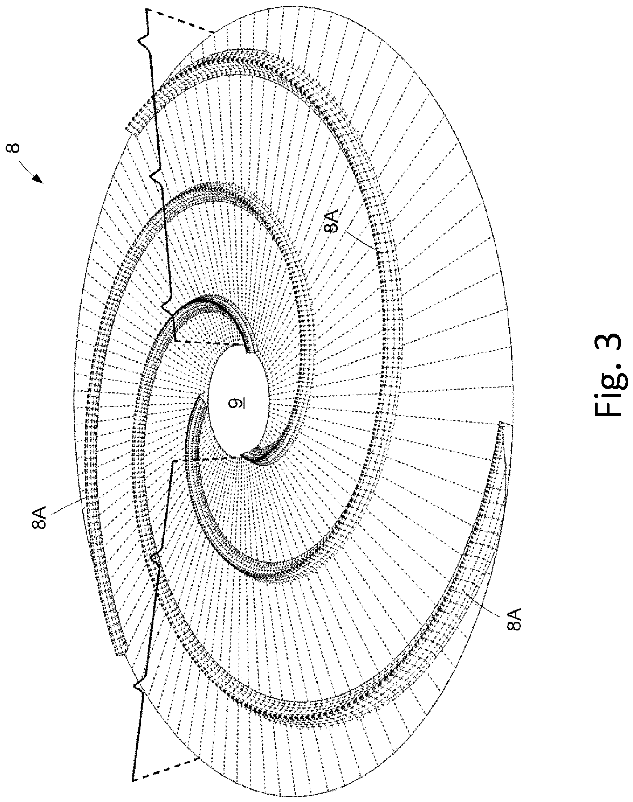

Fig. 3 depicts a schematic perspective of a flow-enhancing surface 8 having a conical base shape and comprising three ridges 8A extending from an inner perimeter abutting on an outlet aperture 9 along spiral trajectories to an outer perimeter. A cross-section of each ridge 8A is bell-shaped and may be formally described by a Gauss, Lorentz or Voigt profile i.e. by a function of type $G(\xi;\sigma)$, $L(\xi;\gamma)$ or $V(\xi;\sigma,\gamma)$ with:

$$G(\xi\,;\sigma) = \frac{e^{-\frac{\xi^2}{2\sigma^2}}}{\sigma\sqrt{2\pi}} \quad ;$$

$$L(\xi\,;\gamma) = \frac{\gamma}{\pi(\xi^2 + \gamma^2)} \quad ;$$

$$V(\xi\,;\sigma,\gamma) = \int\limits_{-\infty}^{+\infty} G(\xi';\sigma)\, L(\xi - \xi';\gamma)\, d\xi' \quad ;$$

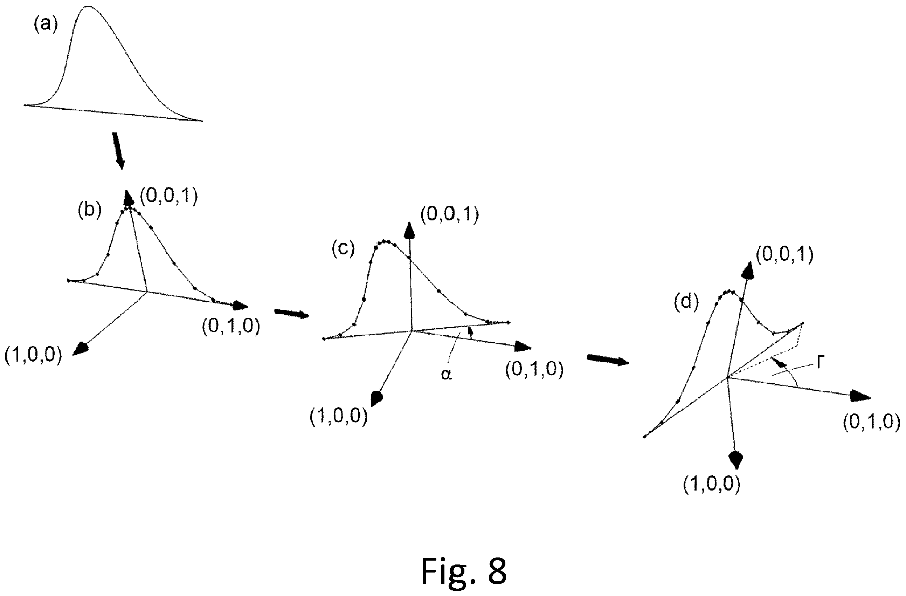

wherein $\xi$ designates a variable corresponding to a perpendicular distance from a spiral trajectory along which ridge 8A extends. When employing computer aided design (CAD) for the manufacture of an actual drainage plate, respectively an injection mold therefor, either of the above profile functions is numerically evaluated. In particular, in the expression for the Voigt profile $V(\xi;\sigma,\gamma)$ the convolution integral between boundaries $-\infty$ and $+\infty$ is substituted with a suitable discrete sum (see also beneath explanation pertaining to Fig. 8).

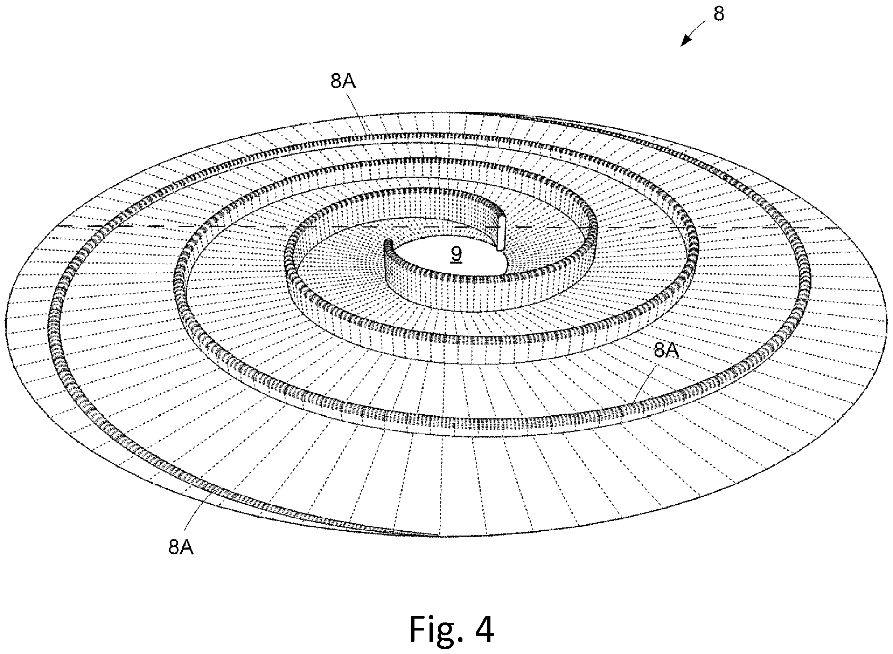

Fig. 4 shows a schematic perspective of a flow-enhancing surface 8 having a conical base shape and comprising two ridges 8A extending from an inner perimeter abutting on an outlet aperture 9 along spiral trajectories to an outer perimeter. Fig. 4 corresponds to Fig. 2B in that ridges 8A protrude upwards parallel to a center axis of the conical base shape such that an edge of each ridge 8A distal from the base shape abuts to a horizontal plane spanned by an outer perimeter of the base shape as indicated by the dashed line.

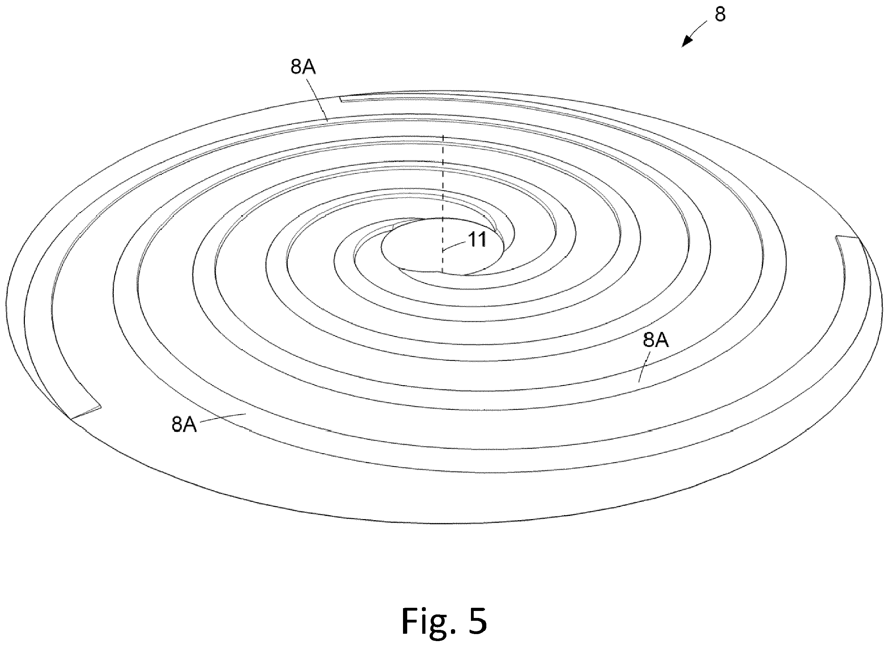

Fig. 5 illustrates a schematic perspective of a flow-enhancing surface 8 with conical base shape and three spiral ridges 8A having an approximately triangular cross section and comprising an upper terrace-like surface. A normal vector of the terrace-like surface is aligned within 10 degrees to a center axis 11 of the conical base shape of flow-enhancing surface 8.

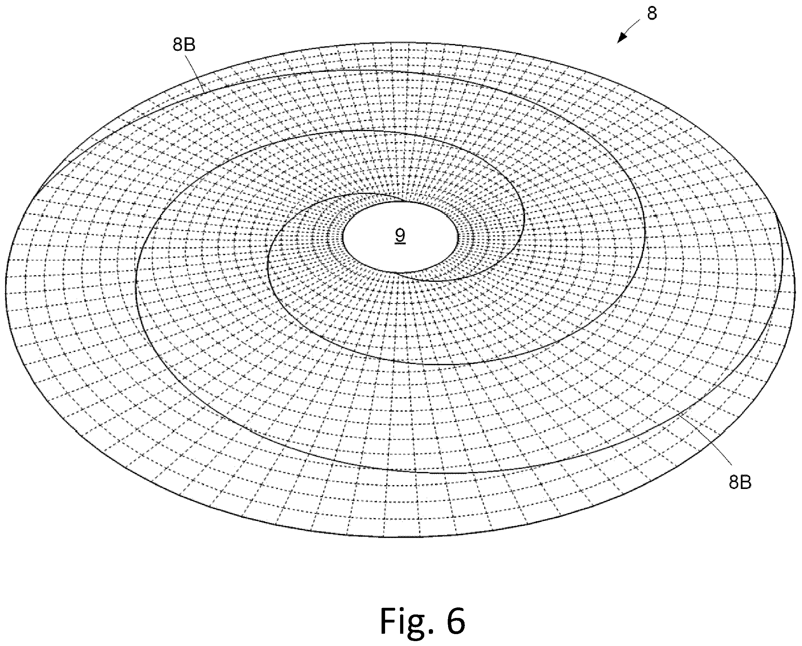

Fig. 6 depicts a perspective schematic of a flow-enhancing surface 8 with a parabolic base shape and two spiral trajectories 8B extending from an inner perimeter abutting on an outlet aperture 9 to an outer perimeter.

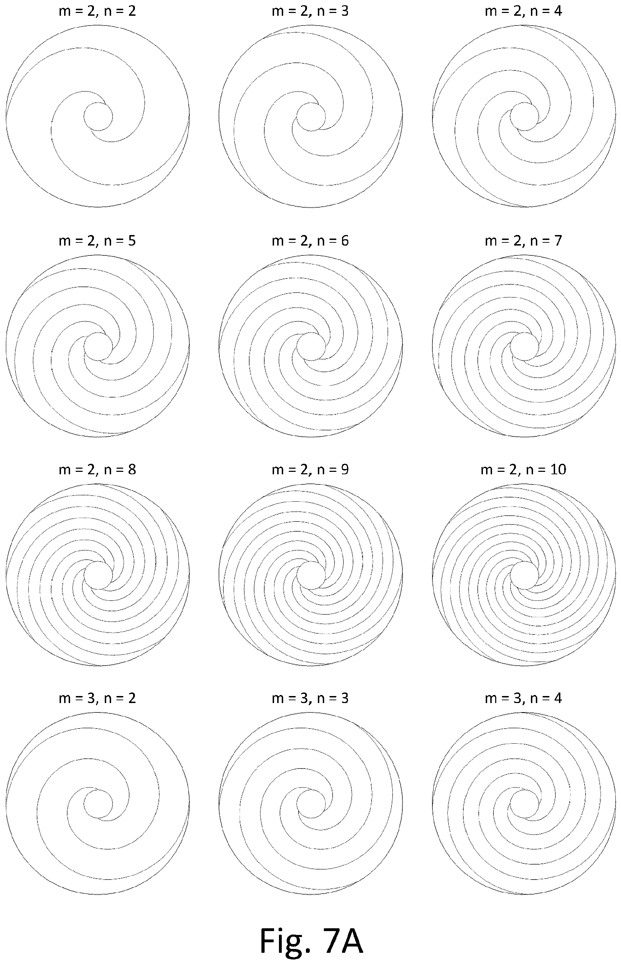

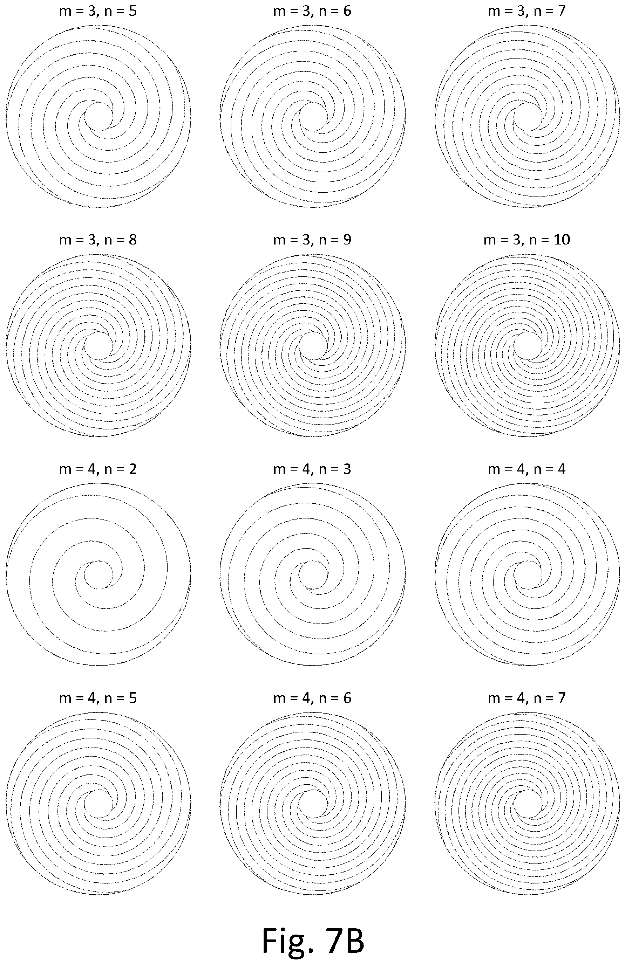

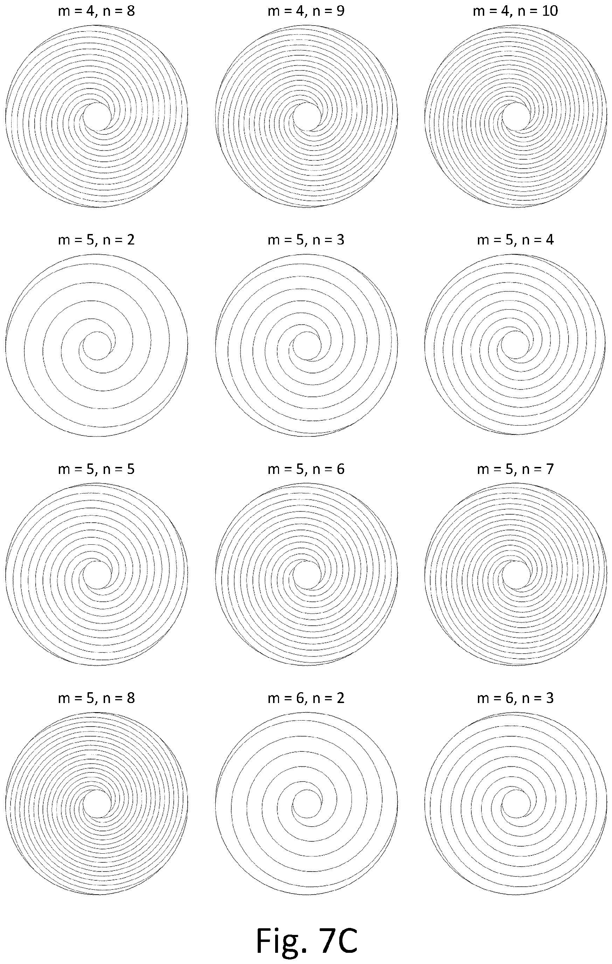

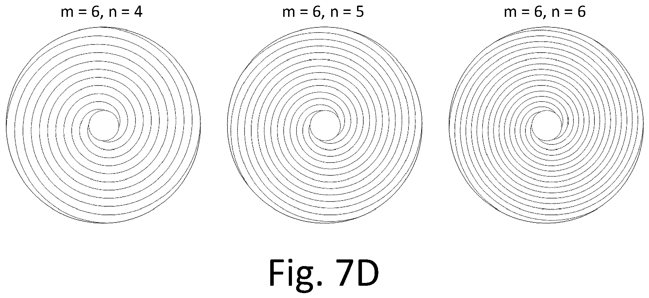

Figures 7A-7D show plan views of various spiral ridge layouts i.e. spiral trajectories along which ridges are arranged. Parameter m designates a multiple of half-turns (180° turns) followed along one spiral trajectory around the center axis of a flow-enhancing surface, whereas n designates the number of spiral trajectories spaced at equiangular intervals around said center axis.

Figures 7A-7D merely show right-handed spiral trajectories according to the previously introduced vector functions

$$\vec{t}_i = \begin{bmatrix} R\dfrac{\gamma}{\pi}\cos\left(\dfrac{2\pi}{n}i + m\,\gamma\right) \\ R\dfrac{\gamma}{\pi}\sin\left(\dfrac{2\pi}{n}i + m\,\gamma\right) \\ h\dfrac{R}{R-r}\left(\dfrac{\gamma}{\pi} - 1\right) \end{bmatrix} \quad \text{and} \quad \vec{\tau}_i = \begin{bmatrix} R\dfrac{\gamma}{\pi}\cos\left(\dfrac{2\pi}{n}i + m\,\gamma\right) \\ R\dfrac{\gamma}{\pi}\sin\left(\dfrac{2\pi}{n}i + m\,\gamma\right) \\ h\dfrac{R^2}{R^2-r^2}\left[\left(\dfrac{\gamma}{\pi}\right)^2 - 1\right] \end{bmatrix}$$

$$\text{with} \quad \begin{cases} \dfrac{r}{R}\pi \le \gamma \le \pi \\ m \in \mathbb{R} \quad \text{and} \quad 2 \le m \le 10 \\ i = 1, 2, \ldots, n \quad \text{and} \quad n \in \{2, 3, 4, 5, 6, 7, 8, 9, 10\} \end{cases}$$

Notwithstanding the depiction in Figures 7A-7D, it is emphasized that the present invention also encompasses left-handed spiral trajectories corresponding to the previously presented vector functions

$$\vec{t}_i = \begin{bmatrix} R\dfrac{\gamma}{\pi}\cos\left(\dfrac{2\pi}{n}i + m\,\gamma\right) \\ -R\dfrac{\gamma}{\pi}\sin\left(\dfrac{2\pi}{n}i + m\,\gamma\right) \\ h\dfrac{R}{R-r}\left(\dfrac{\gamma}{\pi} - 1\right) \end{bmatrix} \quad \text{and} \quad \vec{\tau}_i = \begin{bmatrix} R\dfrac{\gamma}{\pi}\cos\left(\dfrac{2\pi}{n}i + m\,\gamma\right) \\ -R\dfrac{\gamma}{\pi}\sin\left(\dfrac{2\pi}{n}i + m\,\gamma\right) \\ h\dfrac{R^2}{R^2-r^2}\left[\left(\dfrac{\gamma}{\pi}\right)^2 - 1\right] \end{bmatrix}$$

Regarding the chirality of the spiral ridges, it is noted that the Coriolis effect is too weak to have an appreciable influence on a draining water flow (cf. https://en.wikipedia.org/wiki/ Coriolis_force).

Fig. 8 illustrates a method for facile computer-aided design (CAD) of a spiral ridge having an arbitrarily shaped cross-section, e.g. a bell-shaped cross-section. A bell-shaped profile which may be mathematically described by a continuous Gauss, Lorentz or Voigt function as shown in inset (a) of Fig. 8 is discretized at select (0,1,0)-coordinate values as indicated by the 15 dots depicted in inset (b) of Fig. 8, each of which corresponds to a vector having a (1,0,0)-coordinate value of zero. Each such vector is subsequently rotated by an angle $\alpha$ about the (1,0,0)-axis to obtain the bell-shaped cross-section shown in inset (c) of Fig. 8. Angle $\alpha$ corresponds to a cone angle satisfying the relation

$$\tan\alpha = \frac{h}{R-r}$$ wherein h, R and r designate a height, an outer bounding radius and an inner bounding radius of the cone, respectively. Subsequently the vectors corresponding to the dots shown in inset (c) of Fig. 8 are rotated by an angle $\Gamma$ around the (0,0,1)-axis to obtain the cross-section depicted in inset (d) of Fig. 8. Angle $\Gamma$ corresponds to the angle parameter $\gamma$ of one of vectors

$$\vec{t}_i = \begin{bmatrix} R\dfrac{\gamma}{\pi}\cos\left(\dfrac{2\pi}{n}i + m\,\gamma\right) \\ \pm R\dfrac{\gamma}{\pi}\sin\left(\dfrac{2\pi}{n}i + m\,\gamma\right) \\ h\dfrac{R}{R-r}\left(\dfrac{\gamma}{\pi} - 1\right) \end{bmatrix}$$

which each describe a spiral trajectory on the cone defined by h, R and r. Finally, the cross-section depicted in inset (d) of Fig. 8 is translated by one of vectors $\vec{t}_i$. The two consecutive rotations around the (1,0,0)- and (0,0,1)-axis are mathematically represented by two non-commutative matrices:

$$R(\alpha|100) = \begin{pmatrix} 1 & 0 & 0 \\ 0 & \cos\alpha & -\sin\alpha \\ 0 & \sin\alpha & \cos\alpha \end{pmatrix} \quad \text{and} \quad R(\Gamma|001) = \begin{pmatrix} \cos\Gamma & -\sin\Gamma & 0 \\ \sin\Gamma & \cos\Gamma & 0 \\ 0 & 0 & 1 \end{pmatrix}$$

Hence, a spiral trajectory with bell-shaped cross-section may be programmatically generated through repeated geometric transformation of a discrete set of profile base vectors, wherein each transformation comprises a rotation $R(\Gamma|001) \cdot R(\alpha|100)$ followed by a translation $\vec{t_i}$ at select increments of angle $\Gamma$, respectively thereto corresponding angle $\gamma$.

Preferably, the flow-enhancing surface is smooth and has an average roughness Rz in the range of 20 nm to 2 $\mu$m in order to facilitate cleaning and mitigate bacterial colonization.

The average roughness Rz of the flow-enhancing surface of the inventive drainage plate is determined according to DIN EN ISO 4287:2010. In cases where the surface portion to be measured is not freely accessible, an impression is taken by means of a molding compound.

As impression compound, respectively molding compound a material such as cast (gypsum) or a silicone-based precision impression material, e.g. high-viscosity condensation crosslinked polysiloxane as specified in DIN 13 913 A2, ISO 4823 is used. A primary height profile of a surface portion of the flow-enhancing surface or alternatively of a high precision impression thereof is recorded by means of a tactile profilometer conforming to DIN EN ISO 3274:1998, for example a "Hommel-Etamic W20" instrument from Jenoptik. The radius of the sensor tip of the profilometer is 2 $\mu$m.

Generally, the surface of the flow-enhancing surface is not planar and has a functionally designed topography or contour. Furthermore, the surface of the flow-enhancing surface may comprise protruding ridges. In order to determine the surface roughness, contributions to the primary height profile that are attributable to functionally designed structures are removed by software-based low-pass filtering as specified in DIN EN ISO 16610:2013. By way of this low-pass filtering the primary height profile is split into a roughness profile and a contour profile.

The total length Lt of the measurement track is 0.48 mm and comprises a lead-in and lead-out distance and 5 consecutive measurement segments each having a length of Ir = 0.8 mm . The value used as limiting wavelength $\lambda_C$ for the low-pass filter for separation of surface roughness and contour in accordance with DIN EN ISO 16610:2013 is $\lambda_C$ = Ir.

Instead of a tactile profilometer a digital confocal and/or interferometric microscope system such Leica DCM8 or Keyence VR-5000 may be employed for measurement of surface roughness.

The shape of the inventive flow-enhancing surface is measured pursuant to VDI/VDE Standard 2634, Part 3, 2012-08 (ISO 17025 accredited) using a 3D laser scanner such as Creaform/Metek HandySCAN BLACK™.

Examples

Various experiments were conducted to determine the feed-through time for a water volume of 500 ml in a filtration device of type BRITA® fill&serve Mind comprising a feed water reservoir and a BRITA® Microdisc filter made from activated cocoanut shell charcoal. In a reference configuration the bottom face of the plain Microdisc filter serves as outlet. In exemplary embodiments of the invention drainage plates having a conical base shape with a centrally arranged outlet duct and two or three spiral ribs are mounted beneath the Microdisc filter.

The average feed-through time for the reference configuration is 3:20 min. With the inventive embodiments a reduction of the feed-through time between 0:20 min and 0:41 min (corresponding to -10 and -21 %) is achieved.

**Reference signs**

| 1 | filtration device |
| 2 | inlet portion |
| 3 | filtration portion |
| 3A | filter cartridge |
| 4 | outlet portion |
| 5 | drainage plate |
| 6 | outlet duct |
| 6A | inner surface of outlet duct |
| 7A | drainage plate front face |
| 7B | drainage plate back face |
| 8 | flow-enhancing surface |

8A     ridge
8B     spiral trajectory
9       outlet aperture
10     flange
10A   flange surface
10B   flange wall
11     central axis
12     fastener

**Claims**

1. Drainage plate 5 for fluids comprising a flow-enhancing concave surface 8 with an outlet aperture 9, **characterized in that,** the flow-enhancing surface 8 includes ridges 8A extending along two, three or more spiral trajectories 8B.

2. The drainage plate 5 of claim 1, **characterized in that,** the flow-enhancing surface 8 is configured as a conical, parabolic or spherical surface that includes an outlet aperture 9 and ridges 8A extending along two, three or more spiral trajectories 8B.

3. The drainage plate 5 of claim 1 or 2, **characterized in that,** each ridge 8A extends from an outer perimeter to an inner perimeter of the flow-enhancing surface 8.

4. The drainage plate 5 of claim 1 or 2, **characterized in that,** two or more ridges 8A are arranged along each spiral trajectory 8B connecting an outer and an inner perimeter of the flow-enhancing surface 8.

5. The drainage plate 5 according to any one of claims 1 to 4, **characterized in that,** the flow-enhancing surface 8 has a bounding outer radius R and a bounding inner radius r wherein a ratio R/r satisfies the relation $2 \leq R/r \leq 200$.

6. The drainage plate 5 according to any one of claims 1 to 5, **characterized in that,** the flow-enhancing surface 8 has a bounding outer radius R, a bounding inner radius r and a height h which satisfy the relation $1 \leq (R-r)/h \leq 57$.

7. The drainage plate 5 according to any one of claims 1 to 6, **characterized in that,** the ridges 8A have an approximately rectangular cross-section.

8. The drainage plate 5 according to any one of claims 1 to 6, **characterized in that,** the ridges 8A have an approximately bell-shaped cross-section.

9. The drainage plate 5 according to any one of claims 1 to 8, **characterized in that,** it is made from a one piece material.

10. The drainage plate 5 according to any one of claims 1 to 9, **characterized in that,** it is made from a polymeric material.

11. The drainage plate 5 according to any one of claims 1 to 10, **characterized in that,** the flow-enhancing surface 8 has an average surface roughness Rz with $20 \text{ nm} \leq Rz \leq 2 \ \mu\text{m}$.

12. A filtration device 1, **characterized in that,** it comprises a drainage plate 5 according to any one of claims 1 to 11.

Fig. 1

Fig. 2A

EP 3 907 188 A1

Fig. 2B

EP 3 907 188 A1

Fig. 2C

Fig. 3

Fig. 4

Fig. 5

Fig. 6

m = 2, n = 2     m = 2, n = 3     m = 2, n = 4

m = 2, n = 5     m = 2, n = 6     m = 2, n = 7

m = 2, n = 8     m = 2, n = 9     m = 2, n = 10

m = 3, n = 2     m = 3, n = 3     m = 3, n = 4

Fig. 7A

m = 3, n = 5      m = 3, n = 6      m = 3, n = 7

m = 3, n = 8      m = 3, n = 9      m = 3, n = 10

m = 4, n = 2      m = 4, n = 3      m = 4, n = 4

m = 4, n = 5      m = 4, n = 6      m = 4, n = 7

Fig. 7B

Fig. 7C

m = 6, n = 4          m = 6, n = 5          m = 6, n = 6

# Fig. 7D

Fig. 8

EP 3 907 188 A1

Europäisches
Patentamt

European
Patent Office

Office européen
des brevets

**EUROPEAN SEARCH REPORT**

Application Number

EP 20 17 3748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 948 346 A1 (UNILEVER NV [NL]; UNILEVER PLC [GB]) 30 July 2008 (2008-07-30) * paragraphs [0001], [0009], [0014], [0019] * * paragraphs [0028] - [0032]; figures 1, 2 * | 1-12 | INV. C02F1/00 B01D29/92 |
| X | US 5 143 630 A (ROLCHIGO PHILIP M [US]) 1 September 1992 (1992-09-01) * column 1, lines 5-7 * * column 6, line 6 - column 8, line 33 * * column 14, line 58 - column 16, line 12 * * column 17, line 6 - column 20, line 52; figures 1-10 * * column 21, line 24 - column 22, line 50; figures 12, 13 * * column 23, line 60 - column 24, line 9; figures 14-18 * | 1-12 | |
| X | US 5 993 674 A (ROLCHIGO PHILIP M [US] ET AL) 30 November 1999 (1999-11-30) * column 1, lines 5-7 * * column 19, line 9 - column 20, line 43 * * column 21, line 33 - column 22, line 18 * * column 23, line 14 - column 25, line 49; figures 1-4 * | 1-12 | TECHNICAL FIELDS SEARCHED (IPC) C02F B01D |
| X A | US 4 262 841 A (BERBER VIKTOR A ET AL) 21 April 1981 (1981-04-21) * column 1, lines 6-14 * * column 1, line 43 - column 2, line 21 * * column 2, line 39 - column 4, line 9; figures 1-5 * | 1-11 12 | |

-/--

The present search report has been drawn up for all claims

| Place of search | Date of completion of the search | Examiner |
|---|---|---|
| The Hague | 21 October 2020 | Vaz, Miguel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 17 3748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/121951 A1 (HOLM MARTIN [SE] ET AL) 4 May 2017 (2017-05-04) | 1-11 | |
| A | * paragraphs [0001], [0007] - [0018] * | 12 | |
| | * paragraphs [0026] - [0045]; figures 1, 2 * | | |
| | * paragraphs [0046] - [0051]; figure 3 * | | |
| | ----- | | |

TECHNICAL FIELDS
SEARCHED        (IPC)

The present search report has been drawn up for all claims

| Place of search | Date of completion of the search | Examiner |
|---|---|---|
| The Hague | 21 October 2020 | Vaz, Miguel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 3748

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2020

| Patent document cited in search report | | Publication date | Patent family member(s) | | Publication date |
|---|---|---|---|---|---|
| EP 1948346 | A1 | 30-07-2008 | AT | 419050 T | 15-01-2009 |
| | | | BR | PI0618821 A2 | 28-02-2012 |
| | | | EP | 1948346 A1 | 30-07-2008 |
| | | | PL | 1948346 T3 | 30-06-2009 |
| | | | WO | 2007059832 A1 | 31-05-2007 |
| US 5143630 | A | 01-09-1992 | AT | 182806 T | 15-08-1999 |
| | | | AU | 650159 B2 | 09-06-1994 |
| | | | CA | 2106988 A1 | 01-12-1992 |
| | | | DE | 69229730 T2 | 02-12-1999 |
| | | | EP | 0586591 A1 | 16-03-1994 |
| | | | JP | H0771603 B2 | 02-08-1995 |
| | | | JP | H06503033 A | 07-04-1994 |
| | | | US | 5143630 A | 01-09-1992 |
| | | | WO | 9221426 A1 | 10-12-1992 |
| US 5993674 | A | 30-11-1999 | AT | 274367 T | 15-09-2004 |
| | | | AU | 738773 B2 | 27-09-2001 |
| | | | CA | 2320849 A1 | 02-09-1999 |
| | | | DE | 69919682 T2 | 01-09-2005 |
| | | | EP | 1059985 A1 | 20-12-2000 |
| | | | IL | 137800 A | 24-06-2003 |
| | | | JP | 3577460 B2 | 13-10-2004 |
| | | | JP | 2002504415 A | 12-02-2002 |
| | | | US | 5993674 A | 30-11-1999 |
| | | | WO | 9943410 A1 | 02-09-1999 |
| US 4262841 | A | 21-04-1981 | AT | 378923 B | 25-10-1985 |
| | | | AU | 522115 B2 | 20-05-1982 |
| | | | CH | 641056 A5 | 15-02-1984 |
| | | | DD | 139690 A1 | 16-01-1980 |
| | | | DE | 2846477 A1 | 03-05-1979 |
| | | | ES | 474523 A1 | 16-03-1979 |
| | | | FI | 783251 A | 27-04-1979 |
| | | | FR | 2407024 A1 | 25-05-1979 |
| | | | GB | 2007545 A | 23-05-1979 |
| | | | GR | 65592 B | 14-10-1980 |
| | | | HU | 179928 B | 28-01-1983 |
| | | | IT | 1162005 B | 18-03-1987 |
| | | | JP | S5484659 A | 05-07-1979 |
| | | | JP | S5853576 B2 | 30-11-1983 |
| | | | SE | 439440 B | 17-06-1985 |
| | | | SU | 797778 A1 | 23-01-1981 |
| | | | US | 4262841 A | 21-04-1981 |
| US 2017121951 | A1 | 04-05-2017 | CN | 106489008 A | 08-03-2017 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 20 17 3748

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2020

| Patent document cited in search report | Publication date | Patent family member(s) | | Publication date |
|---|---|---|---|---|
| | | EP | 2952845 A1 | 09-12-2015 |
| | | ES | 2615633 T3 | 07-06-2017 |
| | | JP | 6401304 B2 | 10-10-2018 |
| | | JP | 2017516973 A | 22-06-2017 |
| | | US | 2017121951 A1 | 04-05-2017 |
| | | WO | 2015185257 A1 | 10-12-2015 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006163148 A1
- US 6602410 B1
- EP 0823276 B1
- EP 0900174 B1
- EP 0019794 B1